# EUROPEAN PATENT APPLICATION

(11) **EP 4 686 657 A1**
(43) Date of publication of application: **04.02.2026**
(21) Application number: 25190185.6
(22) Date of filing: 17.07.2025
(51) Int. Cl.: B64G 1/10

(54) **SPACECRAFT PLATFORM STRUCTURE**

(30) Priority: 02.08.2024 US 202463678832 P
(71) Applicant: MacDonald, Dettwiler and Associates Corporation, Ste-Anne-de-Bellevue, QC H9X 3R2 (CA)
(72) Inventor: Globensky, Philippe, Sainte-Anne-de-Bellevue, Quebec, H9X 3R2 (CA); Mackay Suthertown, Emily, Sainte-Anne-de-Bellevue, Quebec, H9X 3R2 (CA); Deuchst, Guillaume, Sainte-Anne-de-Bellevue, Quebec, H9X 3R2 (CA); Larouche, Steve, Sainte-Anne-de-Bellevue, Quebec, H9X 3R2 (CA); Labrecque-Piedboeuf, Jean-François, Sainte-Anne-de-Bellevue, Quebec, H9X 3R2 (CA)
(74) Representative: Grünecker Patent- und Rechtsanwälte PartG mbB

(57) **Abstract**

A system for an open-back spacecraft platform structure, a method of assembling a primary platform structure of an open-back spacecraft platform, and a method of assembling a system including an open-back spacecraft platform structure are provided. The system includes the spacecraft platform structure including a circular or polygonal primary support structure (102) including one or more individual modules (102), each individual module including sub-modules disposed within or on the individual module, each individual module being all or part of a side of the circular or polygonal primary support structure and defining an open back of the spacecraft platform structure, a secondary support structure (105) including a first frame including at least four first frame members (110,111), each first frame member (110,111) connected to the primary support structure via a first fitting and connected to the other frame members, and one or more module connectors for bearing and/or transmitting loads of the open-back spacecraft platform structure.

## Description

### Technical Field

The following relates generally to spacecraft platforms, and more particularly to spacecraft platforms for satellite constellations.

### Introduction

The platform primary structure is the major mechanical assembly of a satellite that serves to support and integrate all subsystems. Constellation missions see a variety of different geometries that are predominantly driven by packaging constraints in the launch vehicle fairing.

Spacecraft platforms for constellations may be required to support large payload antenna facing nadir, such as those needed for direct-to-device (D2D) applications. Payload and active antennas for D2D applications can require a large antenna aperture with high power consumption and heat dissipation. Radar applications may similarly involve large antennae facing nadir with high power consumption and dissipation.

Traditionally, a single large, box-like structure is provided as a spacecraft for launch. Such single box-like structure may be an inefficient use of space, and so stacking spacecraft atop one another within or on a platform represents an improvement in efficiency.

However, the power requirements of such spacecraft produce significant heat that it is desirable to dissipate. The traditional single large, box-like structure poses challenges for heat dissipation.

It may be particularly desirable to provide D2D constellation antennas with very large aperture that avoid deployment.

Accordingly, there is a need for an improved spacecraft platform structure that overcomes at least some of the disadvantages of existing spacecraft platform structures.

### Summary

A system for an open-back spacecraft platform structure is provided. The system includes the open-back spacecraft platform structure including a circular or polygonal primary support structure including one or more individual modules, each individual module including sub-modules disposed within or on the individual module, each individual module being all or part of a side of the circular or polygonal primary support structure and defining an open back of the spacecraft platform structure, a secondary support structure including a first frame including at least four first frame members, each first frame member connected to the primary support structure via a first fitting and connected to the other first frame members, and one or more module connectors for bearing and/or transmitting loads of the open-back spacecraft platform structure.

The system may further include an antenna payload including an array of radiating elements, a plurality of support beams mounted on the primary support structure and disposed between the array of the antenna payload and the primary support structure, and a center fitting at which the at least four first frame members are connected together.

The secondary support structure may further include a center cross frame including four cross frame members, each cross frame member connected to the primary support structure via a side fitting and connected to the other cross frame members and to the first frame members via the central fitting.

When one or more spacecraft are stacked atop the open-back spacecraft platform structure, the module connectors of the system may connect to the one or more spacecraft.

When the one or more spacecraft are stacked atop the open-back spacecraft platform structure, the module connectors of the system may transmit or may receive power or data to or from the one or more spacecraft.

The primary support structure may be polygonal and may include four or more of the individual modules forming four or more respective vertices, and each first frame member may connect to the primary support structure at the vertex, and the first fitting may be a corner fitting.

The polygonal primary support structure may be a square and may include four of the individual modules forming four respective vertices.

The polygonal primary support structure may be a hexagon and may include six of the individual modules forming six respective vertices.

The polygonal primary support structure may be an octagon and may include eight of the individual modules forming eight respective vertices.

The primary support structure may be circular, and the one or more module connectors may together be circular.

Each individual module may include four panels forming a rectangular prism, and the sub-modules may be disposed within the rectangular prism.

A method of assembling a primary platform structure of an open-back spacecraft platform is provided. The method includes providing one or more primary support frame modules for defining an open back of the spacecraft platform structure, connecting adjacent primary support frame modules together using a module connector to form a primary support frame, connecting a first end of each of a plurality of support frame members together, and connecting a second end of each of the plurality of support frames members to the primary support frame at a corner or a side of the primary support frame using corner or side fittings, respectively, to form the spacecraft primary structure.

The connection between the second end of each of the plurality of support frame members to the primary support frame may occur at an inner perimeter of the primary support frame, and the first end of each of the plurality of support frame members may be connected to a common central fitting such that the support frame members may be equally spaced about the common central fitting.

When one or more spacecraft are stacked atop the spacecraft primary structure, the module connectors may connect to the one or more spacecraft.

When the one or more spacecraft are stacked atop the spacecraft primary structure, the module connectors may transmit or may receive power or data to or from the one or more spacecraft.

The primary support frame may be a square and may include four of the primary support frame modules forming four respective vertices.

A method of assembling a system including an open-back spacecraft platform structure is provided. The method includes mounting a DRA to a support beam structure including a plurality of support beams to obtain a support beam-mounted DRA and mounting the support beams of the support beam-mounted DRA to a spacecraft primary structure defining an open back of the spacecraft platform structure, the spacecraft primary structure including module connectors.

The DRA may include a plurality of DRA tiles, each DRA tile including a plurality of radiating elements that, when assembled together, form the array.

The method may further include stacking multiple assembled open-back spacecraft platforms on top of each other by connecting the module connectors of adjacent spacecraft platforms to one another.

The support beams may be mounted to the spacecraft primary structure at the nadir-facing side thereof.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1A is a top perspective view of system for an open-back spacecraft platform structure with antenna payload, according to an embodiment;
Figure 1B is a bottom perspective view of the system of Figure 1A;
Figure 2A is a perspective view of the primary structure of the open-back spacecraft platform of Figures 1A-1B in isolation;
Figure 2B is an exploded perspective view of the primary structure of the open-back spacecraft platform of Figure 2A;
Figure 3 is a perspective view of the antenna payload and support beams of Figures 1A-1B in isolation;
Figure 4 is a perspective view of the system of Figures 1A-1B and solar array wings, according to an embodiment;
Figure 5 is a perspective view of a launch fairing storing a plurality of the spacecraft of Figure 4 in a stacked configuration, according to an embodiment;
Figure 6 is a section view of an independent module of Figures 2A and 2B;
Figure 7 is a flowchart of a method of assembling the open-back spacecraft platform structure of Figures 1A-1B, according to an embodiment; and
Figure 8 is a flowchart of a method of assembling the system of Figures 1A-1B, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to spacecraft platforms, and more particularly to spacecraft platforms for satellite constellations.

The following relates particularly to a stackable, mass- and volume-optimized, high-performance platform. This platform form-factor design maximizes spacecraft power generation and payload orbit average dissipation while minimizing satellite volume.

The foregoing enables a large number of satellites to be accommodated in a single launch. This platform mechanical design further permits optical inter-satellite links (OISL) connectivity by having the OISL optical heads extend a greater distance and/or be tucked in space between the spacecraft and the fairing.

The amount of heat to dissipate in such spacecraft is high and is a driver for the final packaging solution. The front side of a direct radiating array (DRA) antenna provided therewith points toward the Earth (nadir). The back side of the DRA is used as primary thermal radiators.

Other large antennas, such as a phased array radar, similarly generate heat to be dissipated.

The open-back flat platform concept core principle is to avoid or minimize the use of heat pipes for the DRA thermal radiation and support a higher power dissipation for a lower mass and cost.

The equivalent isotropic radiated power (EIRP) requirement drives power consumption and heat dissipation. In order to keep components within allowable temperature, and increase reliability, it is highly desirable that the antenna is able to reject the heat efficiently.

The mechanical platform structure has an open-back concept. The open-back concept may be particularly well suited for higher EIRP requirements for a DRA with large antenna aperture.

The mechanical platform structure has a compact design, which minimizes its stowed launch volume.

The mechanical platform structure enables placement of equipment such that resulting mass properties (center of gravity and inertias) are compatible with the guidance, navigation, and control (GNC), propulsion, and launch vehicle requirements.

The mechanical platform structure design enables placement of thrusters which enable orbit acquisition, maintenance, and disposal in a manner compatible with operations.

The mechanical platform structure design enables placement of all equipment to be compatible with vibration, shock, thermal, and space environments.

The mechanical platform structure design facilitates payload and avionics equipment being mounted in modules located on the periphery of the antenna.

The foregoing advantages further allow for a flatter design for the mechanical platform structure.

The mechanical platform structure and its flat design improves the heat rejection and power generation capabilities of the mechanical platform structure for more demanding missions and payloads.

The open-back nature of the mechanical platform structure has a high potential for applications in the Earth Observation context, to accommodate one or more payloads that have large synthetic-aperture radar (SAR) antennas.

The open-back mechanical platform structure provides a low-cost platform that advantageously meets all assembly, integration, and test (AIT), mechanical, structural, thermal, and radiofrequency (RF) requirements and is ideal for high-volume constellation applications.

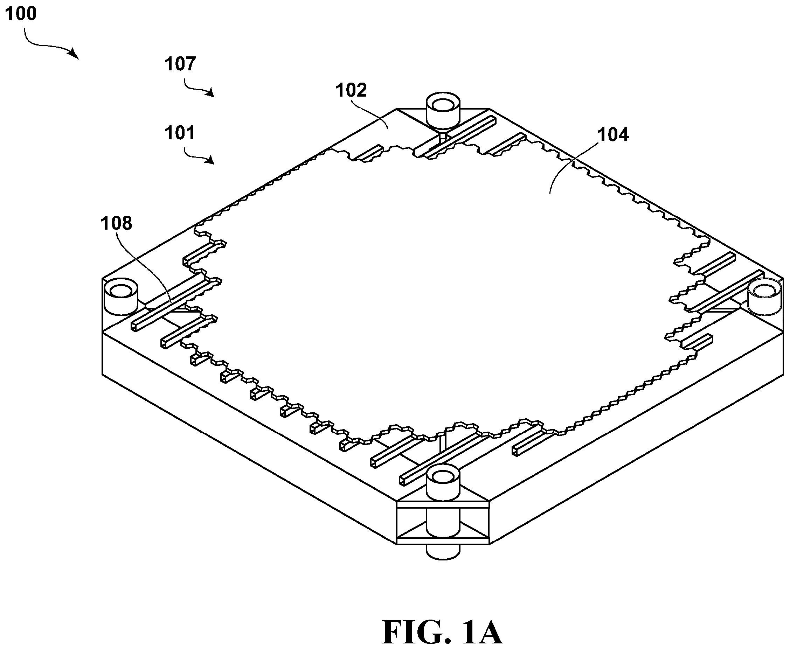

Referring now to Figures 1A-1B, shown therein are top and bottom perspective views, respectively, of a system 100 for an open-back spacecraft platform structure 107 with antenna payload, according to an embodiment.

In Figure 1A, a nadir side 101 of the system 100 is shown.

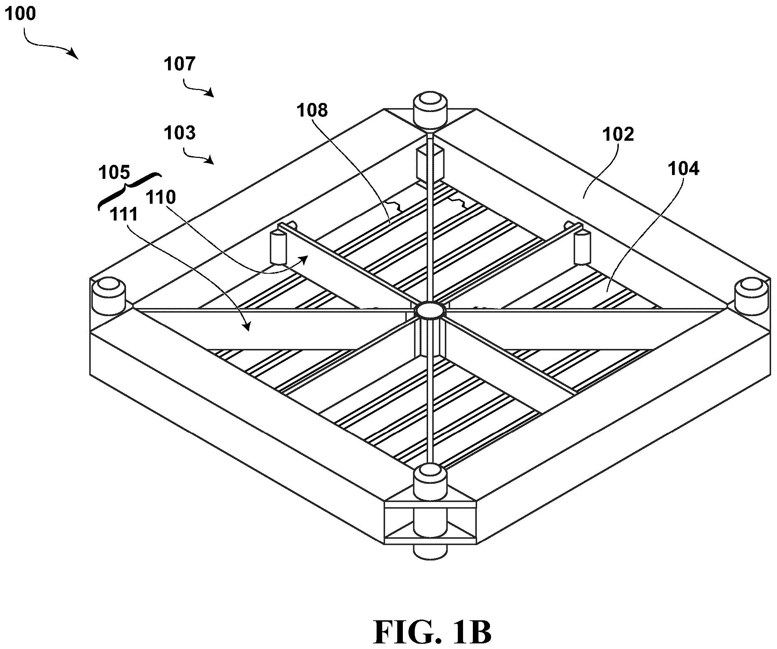

In Figure 1B, a back side 103 of the system 100 is shown.

The system 100, specifically the open-back spacecraft platform structure 107, includes a primary support structure 102 for supporting a direct radiating array (DRA) 104. The DRA 104 is a fixed active antenna. The DRA 104 is nearly entirely exposed to space at the back side 103 to provide a sufficient view factor to outer space to efficiently dissipate heat (as shown in Figure 1B). This may advantageously avoid the heat bottleneck that would otherwise exceed a traditional rejection capacity, e.g., a trapezoidal platform that relies on side panels with heat pipes, a rectangular or hexagonal prism with similar bottlenecks.

The thermal design of the system 100 is optimized to increase reliability and eliminate operational constraints of the DRA 104.

The system 100 may allow for maximizing supported antenna size (i.e., of the DRA 104) without a need to deploy the DRA 104 separately to the structure 107, for fitting within constraints of launch vehicle fairings, for reducing or minimizing mass, and for maximizing available payload power. Because the DRA 104 is fixed to the structure 107 in operation, a complex antenna deployment system is advantageously avoided. In particular, the system 100 has a compact design to minimize the stowed launch volume.

In an embodiment, the DRA 104 monolithic (i.e., non-tiled).

In an embodiment, the DRA 104 includes a plurality of individual DRA tiles, each such DRA tile being an antenna with one or more active components mounted thereto (e.g., one or more power amplifiers at each DRA tile). In the embodiment where the DRA 104 includes the plurality of individual DRA tiles, together the DRA tiles build a signal. In the embodiment, the tiles, when assembled, form a radiating surface of the DRA 104. In the embodiment, each tile is a collection of radiating elements or antenna elements coupled together. The DRA tiles may be uniform in size or non-uniform.

The system 100 includes a plurality of DRA support beams 108 interposed between the primary support structure 102 and the DRA 104.

In an embodiment, the system 100 does not include the support beams 108.

In the embodiment where the DRA 104 includes the plurality of individual DRA tiles, the DRA support beams 108 advantageously translate between the closely spaced attachment points of an individual tile and the more widely spaced primary support structure 102 and the secondary support structure 105.

The primary support structure 102 and the secondary support structure 105 support the support beams 108, which support the DRA 104. In the embodiment where the DRA 104 includes the plurality of individual DRA tiles, the spacing of the support beams 108 is determined by the size of the DRA tiles and the structural properties thereof.

The back side 103 of the DRA 104 has the active components (not shown) mounted thereto with the support beams 108 to the zenith thereof. In an embodiment, some of the active components are disposed on the nadir side 101 of the DRA 104 but behind the DRA 104.

The DRA 104 further includes a harness (not shown) connecting the DRA 104 to the payload on board processor (not shown) and to the platform fuse box(es) (not shown).

In an embodiment, twelve support beams 108 are provided. The support beams 108 are evenly spaced apart from one another. The support beams 108 include ten longer support beams of the same larger size and two shorter end support beams of the same smaller size. The number, size, and spacing of the DRA support beams 108 may vary in other embodiments and is not particularly limited. The cross-section of the DRA support beams 108 may advantageously be minimized to maximize or improve the view factor of the DRA 104 towards the back side 103.

The DRA 104 is mounted to the DRA support beams 108. The support beams 108 are mounted to the open-back spacecraft platform structure 107 (e.g., at the primary support structure 102 and at the center fitting 124). The DRA 104 faces the nadir side 101 as shown in Figure 1A.

The DRA 104 may be assembled atop the DRA support beams 108. The DRA 104 together with the DRA support beams 108 may then be mounted to or otherwise disposed on the primary support structure 102 to form the system 100 as shown in Figure 1A, e.g., assembling and testing the DRA 104 independently and then integrating it onto the open-back spacecraft platform structure 107. The DRA 104 may thus be considered a module of the system 100.

In Figure 1B, the open-back nature of the open-back spacecraft platform structure 107 is particularly apparent, i.e., the back side 103 of the DRA 104 may be seen through the primary support structure 102. Accordingly, the DRA 104 has an open view factor to outer space. In use, the system 100 may be positioned in Earth orbit and oriented such that the DRA 104 faces the Earth at the nadir side 101 and the back side 103 of the open-back spacecraft platform structure 107 faces outer space.

The open-back spacecraft platform structure 107 further includes a secondary support structure 105 for providing further support and rigidity to the open-back spacecraft platform structure 107.

In an embodiment, the space between the DRA support beams 108 (i.e., between individual DRA support beams 108) is less than the space between the primary support structure 102 and the secondary support structure 105.

In an embodiment, the space between the DRA support beams 108 (i.e., between individual DRA support beams 108) is approximately equal to the space between the primary support structure 102 and the secondary support structure 105.

In an embodiment, the space between the DRA support beams 108 (i.e., between individual DRA support beams 108) is greater than the space between the primary support structure 102 and the secondary support structure 105.

For greater clarity, the open-back spacecraft platform structure 107 may be considered to include the primary structure 102 and the secondary structure 105. The system 100 includes the open-back spacecraft platform structure 107, the support beams 108, and the DRA 104.

The secondary support structure 105 includes a diagonal frame 111 for providing support to the open-back spacecraft platform structure 107. The size of the diagonal frame 111 correlates to the size of the DRA 104.

In a preferred embodiment, the secondary support structure 105 further includes a center cross frame 110 for supporting the DRA 104, which may be very thin, and further providing rigidity and support locations to the open-back spacecraft platform structure 107. The size of the center cross frame 110 correlates to the size of the open-back spacecraft platform structure 107.

The diagonal frame 111 advantageously prevents failure of the primary support structure 102 and provides structural integrity to the open-back spacecraft platform structure 107.

In the Figures, the primary support structure 102 has a rectangular or square shape. A rectangular or square shape may present particular advantages in assembly, as straight edges between vertices and vertices of approximately 90 degrees may be particularly efficient.

The primary support structure 102 may have a shape that is any polygon or circle. In a preferred embodiment, the primary support structure 102 is a square. In other embodiments, the primary support structure 102 may be any of a rectangle, a hexagon, an octagon, a decagon, a pentagon, a septagon, a nonagon, a triangle, a circle, or an ellipse.

A hexagonal or octagonal primary support structure 102 may present particularly efficient uses of space.

The heat generating components of the DRA 104 are placed such that they are "above" the open back of the spacecraft platform structure 107. The heat generating components may be placed on the nadir side 101 or the back side 103 of the DRA 104, provided there is a good thermal path (e.g., thermal vias or embedded copper slugs) to transport heat from the nadir side 101 of the DRA 104 to the back side 103 of the DRA 104.

Although heat dissipation has been described with respect to the DRA 104 at the back side 103, heat dissipation may further occur at the nadir side 101. Accordingly, view factors on the nadir side 101 and the back side 103 may both be used for heat dissipation. Accordingly, it is highly desirable to provide good conductivity between where the heat is generated (e.g., active elements of the DRA 104) and both sides of the system 100.

In an embodiment, the open-back spacecraft platform structure 107 does not include the secondary support structure 105, i.e., does not include the center cross frame 110 and does not include the diagonal frame 111.

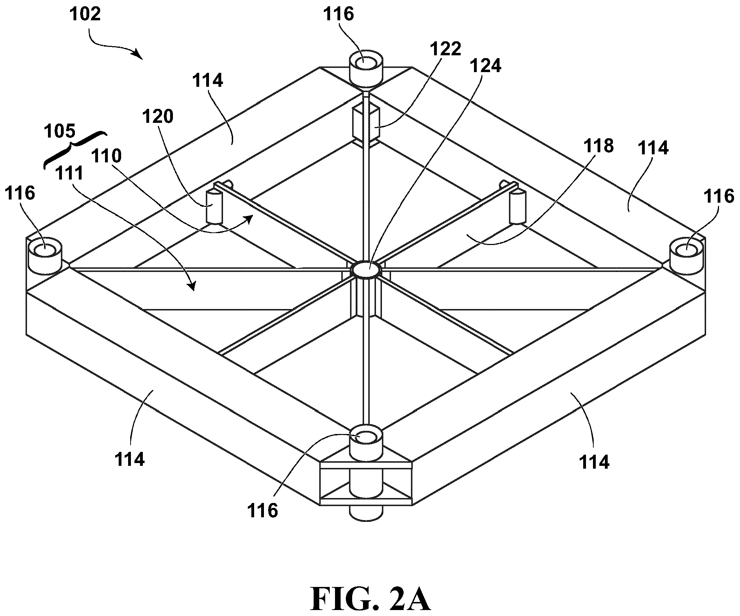

Referring now to Figure 2A, shown therein is a perspective view of the primary support structure 102 in isolation. Further components of the primary support structure 102 are labelled and discussed.

The diagonal frame 111 and the center frame 110 each include a plurality of frame members 118. In the interest of clarity, only a single frame member 118 is labelled.

The diagonal frame 111 includes four frame members 118, each connected to a corner of the primary support structure via a respective corner fitting 122 and further connected to a center fitting 124.

In an embodiment where the primary structure 102 is any of a hexagon, an octagon, a decagon, a pentagon, a septagon, a nonagon, a triangle, a circle, or an ellipse, the number of frame members 118 may vary correspondingly and may relate to the number of vertices of such shape (e.g., as many frame members 118 as vertices, half as many frame members 118 as vertices, twice as many frame members 118 as vertices).

In an embodiment where the primary structure 102 is a circle or an ellipse, which may be considered not to have vertices, the number of frame members 118 may vary corresponding to structural requirements.

Each frame member 118 of the diagonal frame 111 thus has two adjacent frame members 118 of the diagonal frame 111 disposed at respective angles of 90 degrees thereto about the center fitting 124.

Where the diagonal frame 111 and/or the center frame 110 are assembled differently, e.g., via welding or additive manufacturing, no center fitting 124, side fittings 120, and/or corner fittings 122 may be provided.

Each frame member 118 of the diagonal frame 111 thus has two adjacent frame members 118 of the center frame 110 disposed at respective angles of 45 degrees thereto about the center fitting 124.

The center frame 110 includes four further frame members 118, each connected to a side of the primary support structure via a respective side fitting 120 and further connected to the center fitting 124.

Each frame member 118 of the center frame 110 thus has two adjacent frame members 118 of the center frame 110 disposed at respective angles of 90 degrees thereto about the center fitting 124.

Each frame member 118 of the center frame 110 thus has two adjacent frame members 118 of the diagonal frame 111 disposed at respective angles of 45 degrees thereto about the center fitting 124.

The side fittings 120 may be provided at a midpoint of respective sides of the primary support structure 102.

The frame members 118 may be aluminum honeycomb panels. The frame members 118 may be a truss or beam, whether made of aluminum or otherwise. The frame members 118 may be a carbon fiber layup without a honeycomb center core.

The frame members 118 may be relatively short in order to allow the open-back spacecraft platform structure 107 to stow better, to reduce more volume, and to allow more spacecraft to be stacked atop the open-back spacecraft platform structure 107, as will be discussed in further detail hereinbelow.

The primary support structure 102 further includes module connectors 116 for bearing or transmitting loads of the system 100 and for connecting adjacent components of the system 100, for example other spacecraft stacked on top thereof. The module connectors 116 are configured to connect adjacent modules 114 (described below) to form the primary support structure 102. The module connectors 116 are also configured to facilitate stacking of multiple primary support structures 102. In some embodiments, the module connectors 116 may not provide the stacking functionality.

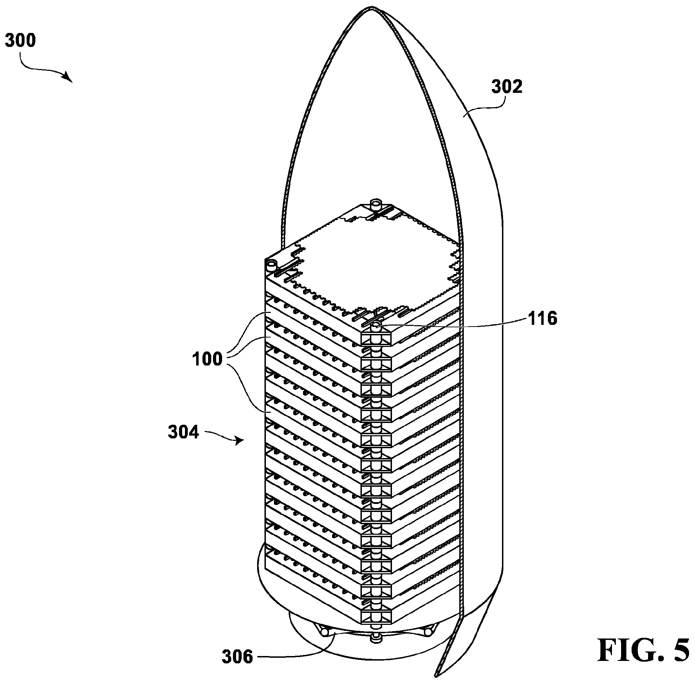

The module connectors 116 provide for or allow a harness path between adjacent modules on the spacecraft platform structure 107. The module connectors 116 may further provide a harness path between spacecraft platform structures 107 stacked on top of each other (e.g., as in Figure 5).

The module connectors 116 are disposed on respective corners of the primary support structure 102, relatively proximate to the respective corner fittings 122.

The module connectors 116 further connect sides of the primary support structure 102 together and provide rigidity thereto.

Although the module connectors 116 are shown in the Figures as disposed at respective corners of the primary support structure 102, it will be appreciated that the module connectors 116 may be disposed in the center of respective sides of the primary support structure 102 (e.g., adjacent respective side fittings 120) instead of or in addition to being disposed in respective corners. The module connectors 116 may be disposed in or on only some sides and/or only some corners of the primary support structure 102.

Where the primary support structure 102 is circular or elliptical, as previously discussed, a single correspondingly circular or elliptical module connector 116 may be provided, or one or more module connectors 116 that together form a circular or elliptical shape.

The module connectors 116 and the connectors 120, 122, 124 may be made of aluminum. The module connectors 116 and the connectors 120, 122, 124 may be made of other metals, e.g., titanium, or may be made of multiple metals.

The primary support structure 102 includes independent modules 114 coupled together via the module connectors 116. Each independent module 114 includes four rectangular panels connected together to form a rectangular prism. Each independent module 114 includes an interior cavity defined by the panels. The interior cavity may be used to house components of the spacecraft, such as electronics and other equipment. For example, the interior cavity of one or more independent modules 114 may be used to store electronics and other supporting equipment for the DRA antenna 104. The independent modules 114 may also be used for mounting equipment on one or more exterior surfaces of the panels.

In an embodiment, the independent modules 114 include more or fewer rectangular panels than shown in the Figures (e.g., three rectangular panels connected together to form a triangular prism, six rectangular panels connected together to form a hexagonal prism).

In an embodiment, each independent module 114 includes only a single beam or plate with no internal cavity, and equipment, such as the sub-modules 502, is exposed to space.

Because the primary support structure 102 is shown as a square in Figure 2A, four independent modules 114 are shown at each side thereof, but it will be appreciated that a primary support structure 102 with a different number of sides (e.g., a hexagon) may have a different number of independent modules 114 provided therewith (e.g., six).

Each independent module 114 is all or part of a side of the primary support structure 102. Accordingly, each independent module 114 may be a single side of the primary support structure. Accordingly, each independent module 114 may be part of a side of the primary support structure.

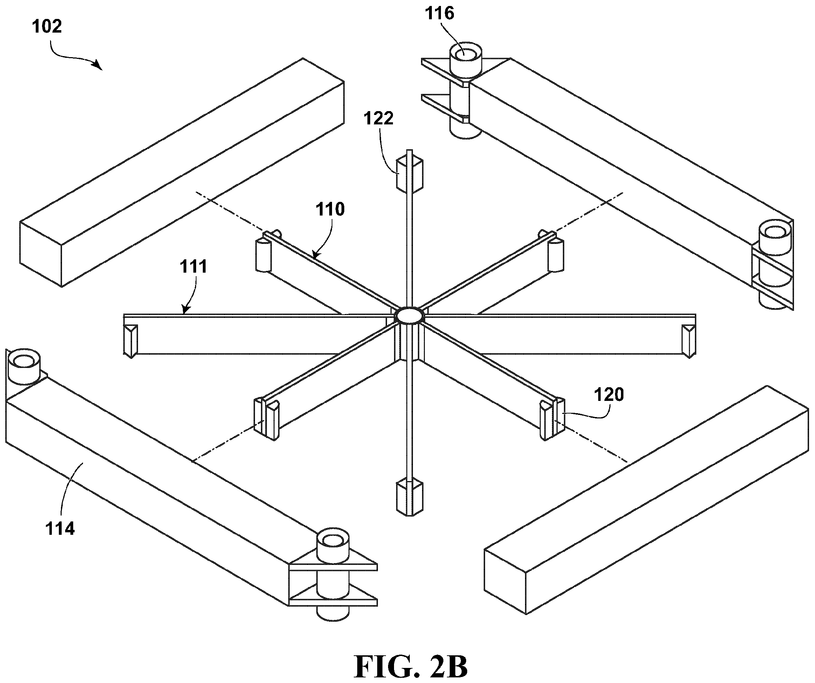

Referring now to Figure 2B, shown therein is an exploded perspective view of the primary support structure 102 of Figures 1A-1B. In particular, it may be observed that the four independent modules connect to each other at corners thereof (via the corner fittings 122 and the module connectors 116), to the diagonal frame 111 at the corner fittings 122, and to the center cross frame 110 at the side fittings 120. In the interest of clarity, only one exemplary component of each type is labelled in Figure 2B.

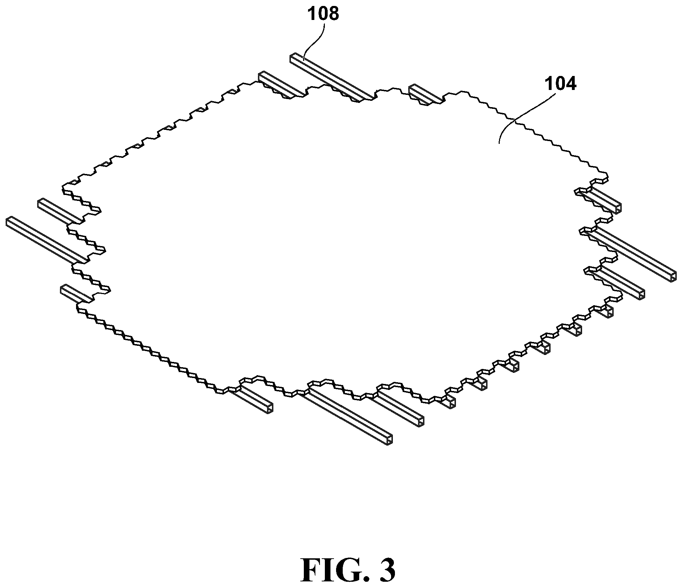

Referring now to Figure 3, shown therein is a perspective view of the DRA 104 and support beams 108 of Figures 1A-1B in isolation.

The DRA 104 is disposed atop the DRA support beams 108 as previously discussed. In an embodiment, twelve DRA support beams 108 are provided, but it will be appreciated that more or fewer such DRA support beams 108 may be provided according to the size of the DRA 104 and/or operational constraints. The DRA support beams 108 advantageously provide a routing path for a harness that connects the DRA 104 to the rest of the spacecraft platform structure 107.

The DRA support beams 108 may further advantageously allow for convenient paths for routing electrical/optical harnesses to and/or from the DRA 104.

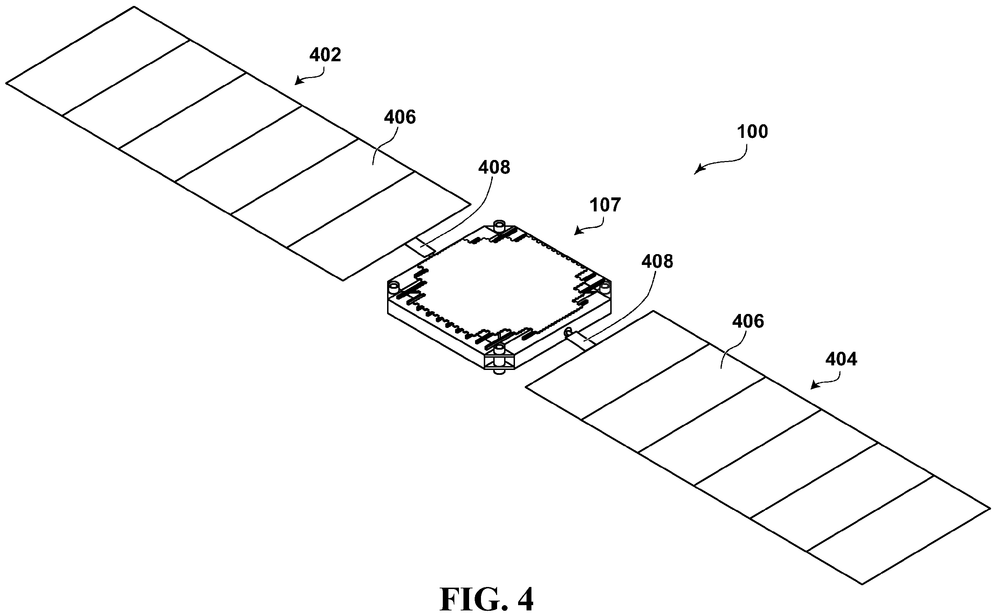

Referring now to Figure 4, shown therein is a perspective view of the system 100 deployed in space.

The system 100 further includes deployable solar array wings 402, 404 for powering the system 100.

Each solar wing 402, 404 includes one or more solar panels 406. To promote clarity, only a single solar panel 406 is labelled on each respective solar wing 402, 404.

The deployable solar array wings 402, 404 may transition from a stowed configuration (e.g., for launch) to a deployed configuration (as shown in Figure 4). In the stowed configuration, the solar wings 402, 404 may be stowed within the open back at the back side 103 of the spacecraft platform structure 107.

The deployable solar array wings 402, 404 are attached to the primary structure 102 via connectors 408. The solar wings 402, 404 may each be attached to the respective connector 408 via screws.

Referring now to Figure 5, shown therein is a perspective view of a launch fairing 300 storing a plurality of the spacecraft platform structure 107 of Figure 4 in a stacked configuration 304. The launch fairing 300 is attached to a launch vehicle (not shown).

The launch fairing 300 has an outer shell 302 suitable to protect the spacecraft platform structure 107 stored therein. For the purposes of clarity in Figure 5, the outer shell 302 is shown as only partially complete, but it will be appreciated that, in actuality, the outer shell 302 is complete.

Further shown is a launch vehicle adapter 306 for providing for structural attachment of the spacecraft platform structures 107. The launch vehicle adapter 306 is further attached to the launch vehicle.

In the stacked configuration 304, the module connectors 116 are mutually connected such that mechanical or physical loads from each respective primary structure 102. The module connectors 116 may further provide for or allow power, data, and other desired connections to be formed or shared between spacecraft platform structures 107. The module connectors 116 further connect each spacecraft platform structure 107 to the launch vehicle adapter 306 (either directly, for a particular spacecraft platform structure 107 immediately adjacent the launch vehicle adapter 306, or indirectly, via the spacecraft platform structure 107 in between the particular spacecraft platform structure 107 and the launch vehicle adapter 306). After deployment of the launch vehicle and once the spacecraft platform structures 107 are in orbit, the respective connectors 116 facilitate separation of each spacecraft platform structure 107 from the other spacecraft platform structures 107. The connectors 116 may include a support hold-down mechanism (not shown). The support hold-down mechanism may be spring-loaded. The support hold down mechanism may not be spring-loaded.

In an embodiment, the module connectors 116 only transmit the mechanical or physical loads, and different or other components transmit power, data, and other desired connections and connect to the launch vehicle adapter 306.

In the stacked configuration 304, the spacecraft platform structures 107 may have different rotations or face differently, e.g., to accommodate taller structures. The relative position of the connectors 116 may enable a clocking between adjacent spacecraft platform structures 107 to enable a more compact stack thereof, where equipment mounted on the periphery or on the top or bottom of each spacecraft may otherwise be in interference, e.g., OISL optical heads, feeder link antennas, thruster modules. The spacecraft platform structures 107 may further be rotated to accommodate different dimensions (e.g., a particular spacecraft platform structure 107 being stored "vertically", while other spacecraft platform structures are stored "horizontally").

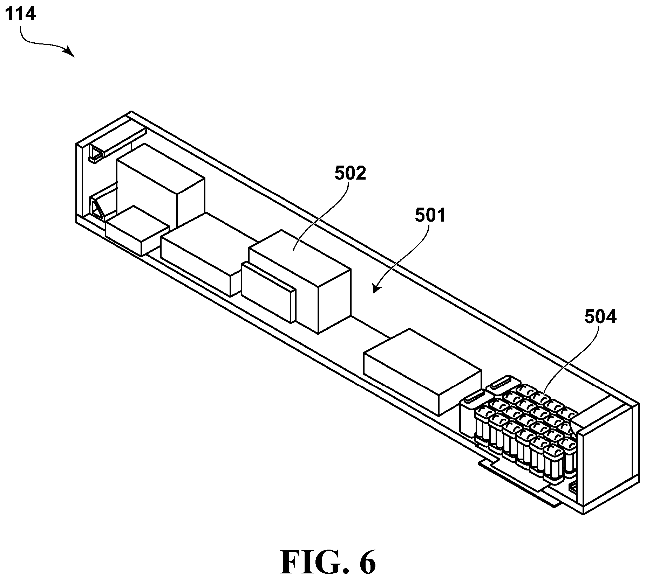

Referring now to Figure 6, shown therein is a section view of an independent module 114 of Figures 2A-2B.

The independent module 114 defines an interior cavity 501. The interior cavity 501 of the independent module 114 includes a plurality of sub-modules 502. Sub-modules 502 may be mounted to one or more interior surfaces of the panels making up the independent module 114. Each sub-module 502 performs all or part of one or more of the designated functions of the independent module 114. Examples of sub-modules 502 may include propulsion, navigation and attitude control or electrical power system, payload or communication and telecommand, on-board computer, batteries, battery charge regulators, transceivers, propellant tank, torque rods, various payload equipment.

The sub-modules 502 may be mounted to the exterior of a module 114 (e.g., this exterior mounting may be particularly suitable where the sub-module 502 is a thruster, feeder antennas, or star tracker(s)).

The independent module 114 further includes a connection 504 for receiving or transmitting power or data between the independent module and other components (e.g., other independent modules 114 of other spacecraft platform structures 107, via respective module connectors 116 as shown in Figure 5).

The independent modules 114 may be assembled individually or independently before integration with the rest of the spacecraft platform structure 107. The independent modules 114 further support thermal hardware, such as optical solar reflectors (OSRs), second surface mirror (SSM) tape, heat pipes, and heaters and temperature sensors. The independent modules 114 made be made of honeycomb panels (optionally with embedded inserts). The independent modules 114 may be made of machined aluminum panels (optionally with reinforcing ribs or a truss structure).

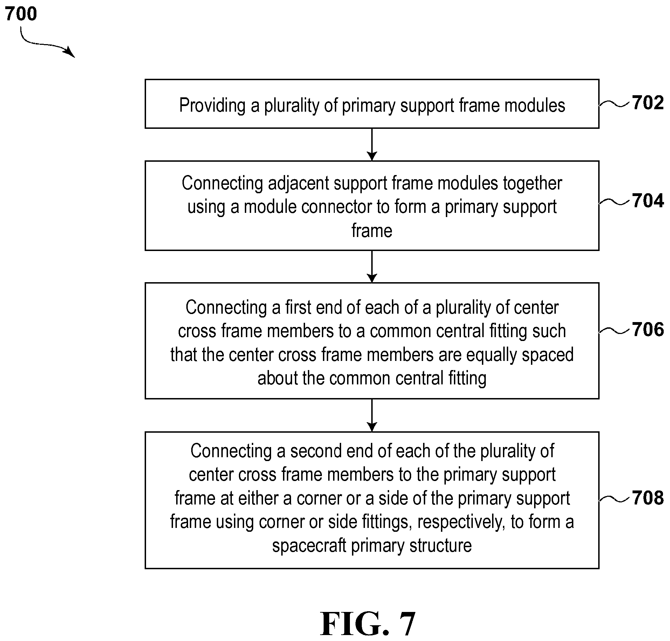

Referring now to Figure 7, shown therein is a method 700 of assembling a primary platform structure of an open-back spacecraft platform, according to an embodiment. The method 700 may be used to assemble the primary platform structure 102 of Figures 2A and 2B.

At 702, the method 700 includes providing a plurality of primary support frame modules.

At 704, the method 700 includes connecting adjacent primary support frame modules together using a module connector to form a primary support frame.

At 706, the method 700 includes connecting a first end of each of a plurality of center cross/support frame members to a common central fitting such that the center cross/support frame members are equally spaced about the common central fitting.

At 708, the method 700 includes connecting a second end of each of the plurality of center cross/support frames members to the primary support frame at a corner or a side of the primary support frame using corner or side fittings, respectively, to form a spacecraft primary structure.

The connection between the second end of each of the plurality of center cross/support frame members to the primary support frame may occur at an inner perimeter of the primary support frame.

It will be appreciated by one of skill in the art that the method 700 may be performed in a variety of possible orders. For example, the primary support frame modules may be attached together first, and then the center cross/support frame members may be attached to the assembled set of modules. As another example, the center cross/support frame may assembled first, and then modules may be attached thereto (and to each other). In another example, submodules of the modules may be assembled after the foregoing elements are performed.

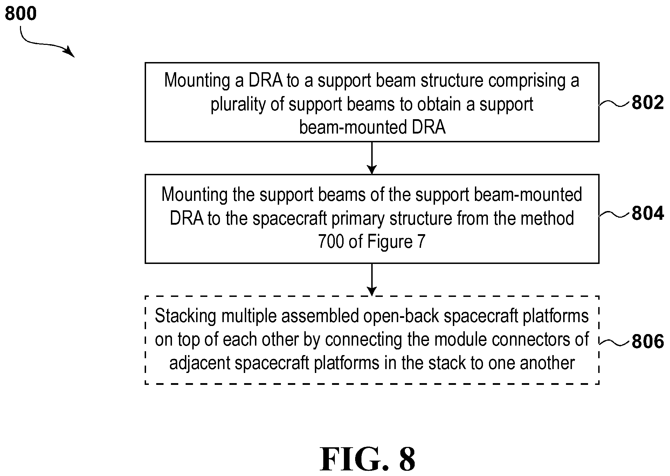

Referring now to Figure 8, shown therein is a method 800 of assembling a system including an open-back spacecraft platform structure, according to an embodiment. The method 800 may be used to assemble the open-back spacecraft platform structure 107 of Figures 1A-1B.

At 802, the method 800 includes mounting a DRA to a support beam structure comprising a plurality of support beams to obtain a support beam-mounted DRA.

At 804, the method 800 includes mounting the support beams of the support beam-mounted DRA to the spacecraft primary structure from the method 700 of Figure 7.

The support beams may be mounted to the spacecraft primary structure at the nadir-facing side thereof.

At 806, optionally, the method 800 includes stacking multiple assembled open-back spacecraft platforms on top of each other by connecting the module connectors of adjacent spacecraft platforms in the stack to one another.

While the above description provides examples of one or more apparatus, methods, or systems, it will be appreciated that other apparatus, methods, or systems may be within the scope of the claims as interpreted by one of skill in the art.

## Claims

1. A system for an open-back spacecraft platform structure, the system comprising the open-back spacecraft platform structure comprising:
a circular or polygonal primary support structure comprising:
one or more individual modules, each individual module comprising sub-modules disposed within or on the individual module, each individual module being all or part of a side of the circular or polygonal primary support structure and defining an open back of the spacecraft platform structure;
a secondary support structure comprising:
a first frame comprising at least four first frame members, each first frame member connected to the primary support structure via a first fitting and connected to the other first frame members; and
one or more module connectors for bearing and/or transmitting loads of the open-back spacecraft platform structure.

2. The system of claim 1, further comprising an antenna payload comprising an array of radiating elements, a plurality of support beams mounted on the primary support structure and disposed between the array of the antenna payload and the primary support structure, and a center fitting at which the at least four first frame members are connected together.

3. The system of claim 1, wherein the secondary support structure further comprises a center cross frame comprising four cross frame members, each cross frame member connected to the primary support structure via a side fitting and connected to the other cross frame members and to the first frame members via the central fitting.

4. The system of claim 1, wherein when one or more spacecraft are stacked atop the open-back spacecraft platform structure, the module connectors of the system connect to the one or more spacecraft and the module connectors of the system transmit or receive power or data to or from the one or more spacecraft.

5. The system of claim 1, wherein the primary support structure is polygonal and comprises four or more of the individual modules forming four or more respective vertices, and wherein each first frame member connects to the primary support structure at the vertex, and wherein the first fitting is a corner fitting.

6. The system of claim 5, wherein the polygonal primary support structure is a square and comprises four of the individual modules forming four respective vertices, or wherein the polygonal primary support structure is a hexagon and comprises six of the individual modules forming six respective vertices, or wherein the polygonal primary support structure is an octagon and comprises eight of the individual modules forming eight respective vertices, or wherein the primary support structure is circular and the one or more module connectors are together circular.

7. The system of claim 1, wherein each individual module comprises four panels forming a rectangular prism, and wherein the sub-modules are disposed within the rectangular prism.

8. A method of assembling a primary platform structure of an open-back spacecraft platform, the method comprising:
providing one or more primary support frame modules for defining an open back of the spacecraft platform structure;
connecting adjacent primary support frame modules together using a module connector to form a primary support frame;
connecting a first end of each of a plurality of support frame members together; and
connecting a second end of each of the plurality of support frames members to the primary support frame at a corner or a side of the primary support frame using corner or side fittings, respectively, to form the spacecraft primary structure.

9. The method of claim 8, wherein the connection between the second end of each of the plurality of support frame members to the primary support frame occurs at an inner perimeter of the primary support frame, and wherein the first end of each of the plurality of support frame members is connected to a common central fitting such that the support frame members are equally spaced about the common central fitting.

10. The method of claim 8, wherein when one or more spacecraft are stacked atop the spacecraft primary structure, the module connectors connect to the one or more spacecraft, and the module connectors transmit or receive power or data to or from the one or more spacecraft.

11. The method of claim 8, wherein the primary support frame is a square and comprises four of the primary support frame modules forming four respective vertices.

12. A method of assembling a system comprising an open-back spacecraft platform structure, the method comprising:
mounting a DRA to a support beam structure comprising a plurality of support beams to obtain a support beam-mounted DRA;
mounting the support beams of the support beam-mounted DRA to a spacecraft primary structure defining an open back of the spacecraft platform structure, the spacecraft primary structure including module connectors.

13. The method of claim 12, wherein the DRA comprises a plurality of DRA tiles, each DRA tile including a plurality of radiating elements that, when assembled together, form the array.

14. The method of claim 12 further comprising stacking multiple assembled open-back spacecraft platforms on top of each other by connecting the module connectors of adjacent spacecraft platforms to one another.

15. The method of claim 12, wherein the support beams are mounted to the spacecraft primary structure at the nadir-facing side thereof.
